# EUROPÄISCHE PATENTSCHRIFT

(11) **EP 0 510 414 B1**
(45) Veröffentlichungstag und Bekanntmachung des Hinweises auf die Patenterteilung: **13.09.1995**
(21) Anmeldenummer: 92105844.2
(22) Anmeldetag: 04.04.1992
(51) Int. Cl.: B29C 45/02, B29C 45/14, B29C 43/36, B29C 70/00

(54) **Vorrichtung zum Herstellen laminierter Formteile aus thermoplastischem Kunststoff-Material**
Apparatus for producing laminated articles from thermoplastic material
Appareil pour la fabrication d'articles laminés en matière thermoplastique

(30) Priorität: 23.04.1991 DE 4113148
(43) Veröffentlichungstag der Anmeldung: 28.10.1992
(73) Patentinhaber: Krauss-Maffei Aktiengesellschaft, 80997 München (DE)
(72) Erfinder: Zweig, Konrad, Dipl., W-8900 Augsburg (DE); Bürkle, Erwin, Dr. Dipl.-Ing., W-8177 Bichl (DE); Spötzl, Markus, Dipl.-Ing. (FH), W-8000 München 71 (DE)

(56) Entgegenhaltungen:
- EP-A- 0 186 015
- DE-C- 934 275
- FR-A- 2 591 525
- US-A- 4 071 532
- PATENT ABSTRACTS OF JAPAN vol. 13, no. 296 (M-846)(3644) 10. Juli 1989 & JP-A-1 085 721 (TOYOTA GOSEI CO LTD.)

## Beschreibung

Die Erfindung betrifft eine Vorrichtung zum Herstellen laminierter Formteile gemäß Oberbegriff des Anspruchs 1.

Eine Vorrichtung dieser Art ist aus der JP-A-1-85721 (Patent Abstracts) bekannt, mit der laminierte Formteile herstellbar sind, die aus einer Grundschicht aus thermoplastischem Kunststoffmaterial und einer Deckschicht bestehen. Bei dieser Vorrichtung sind die obere und die untere Formhälfte jeweils soweit auseinanderzufahren, daß die Mulden in der unteren Formhälfte, die durch die Absenkung der in der unteren Formhälfte angeordneten kolbenartigen Verdrängerkörper gebildet werden, mit schmelzeförmigem thermoplastischen Kunststoffmaterial befüllt werden können. Der weite Öffnungshub und das Einbringen der Kunststoffschmelze über bis zu den Mulden einzufahrende Zuführdüsen erhöhen die Zykluszeit zur Herstellung eines laminierten Formteils. Zudem erhöhen die Zuführeinrichtungen für die thermoplastische Kunststoffschmelze, die taktmäßig zwischen die obere und die untere Formhälfte ein- und ausgefahren werden müssen, den konstruktiven Bauaufwand.

Aus der US-PS 4,071,532 ist es ferner bekannt, in Falle von mit Hinterschneidungen versehenen Formkörpern neben der unteren und der oberen Formhälfte mindestens noch ein weiteres Formteil vorzusehen, dessen Trennebenen zu den benachbarten Formteilen so gelegt sind, daß sich bei dem zu bildenden Formkörper keine Hinterschneidungseinschlüsse mehr ergeben können.

Der Erfindung liegt daher die Aufgabe zugrunde, eine Vorrichtung der aus der JP-A-1-85721 bekannten Art so zu verbessern, daß die Zufuhr von thermoplastischem Kunststoffmaterial bei vollkommen oder weitgehend geschlossenem Formhohlraum erfolgen kann.

Diese Aufgabe wird durch die kennzeichnenden Merkmale des Anspruchs 1 gelöst.

Es ergibt sich der Vorteil, daß die Zykluszeiten verkürzt werden können, da die Formhälften nicht mehr zur Beschickung der Mulden mit thermoplastischer Kunststoffschmelze offengehalten werden müssen. Im weiteren besteht der Vorteil, daß seitlich der Formhälften keine zwischen die Formhälften ein- und ausfahrbaren Zuführeinrichtungen für Kunststoffschmelze vorzusehen sind. Neben der Verringerung des baulichen Aufwandes wird dadurch die Zugänglichkeit im Bereich zwischen den Formhälften verbessert.

Ausführungsformen der Erfindung werden nachfolgend anhand der Zeichnung näher erläutert. Es zeigt:
- Fig. 1: in Schnittdarstellung eine mit Hinterschnitten versehene Preßform mit geschlossenem Formhohlraum und mit eingelegter Deck schicht vor Beginn des Fließpressvorganges und
- Fig. 2: in Schnittdarstellung eine Preßform ohne Hinterschnitte mit einer Zuführvorrichtung für thermoplastisches Kunststoff-Material über den Verdrängerkörper.

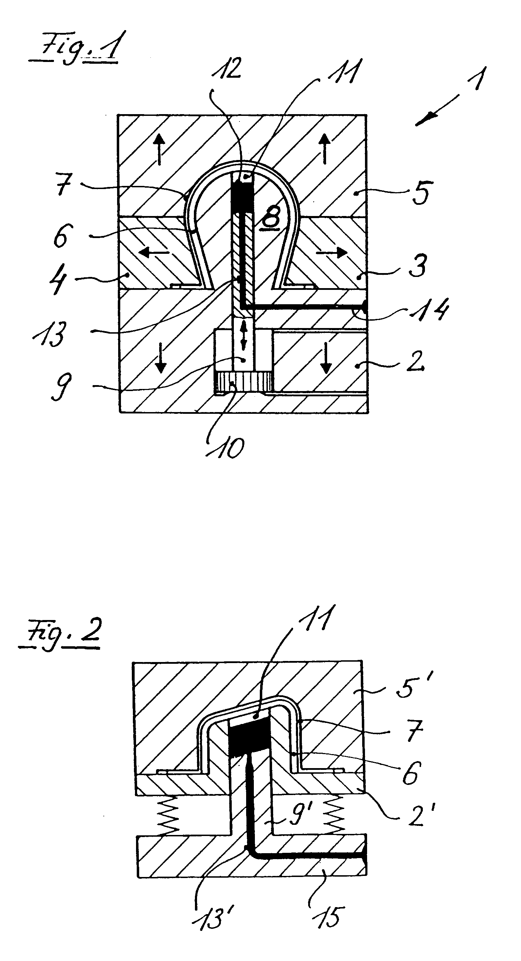

Die in Fig. 1 dargestellte Preßform 1 besteht aus einer unteren Formhälfte 2, zwei mittleren Formteilen 3 und 4 sowie einer oberen Formhälfte 5, die sämtlich einen Formhohlraum 6 einschließen. In diesem ist eine Deckschicht 7 eingelegt, die aus einem beliebigen flexiblen, ein-oder mehrschichtigen Material, z.B. textilem Gewebe, Leder, Kunstleder, d.h. Kunststoff-Material mit Lederprägung, Schaumstoffolie oder dergleichen bestehen kann. Die Deckschicht 7 kann bereits auch aus einem halbstarren bzw. elastisch verformbaren vorformling bestehen, der in einem vorangegangenen Spritzgieß-,Tiefzieh-,Rotations oder Preßvorgang hergestellt worden sein kann.

Die untere Formhälfte 2 weist eine nach oben gerichtete, die Kontur des Formhohlraumes 6 bestimmende Ausbuchtung 8 auf, die im unteren Bereich eingeschnürt ist und dort eine Hinterschneidung bildet.

Im Hinblick auf die vorliegende Hinterschneidung sind die Einzelelemente der Preßform beim öffnen in die durch die Pfeile gekennzeichnete Richtung zu bewegen.

In der Ausbuchtung 8 der unteren Formhälfte 2 ist ein Teilstück dieser Formhälfte als kolbenartiger Verdrängerkörper 9 angeordnet, der über einen hydraulischen Hubkolben 10 reversierbar verstellbar ist. In der dargestellten abgesenkten Position bildet der Verdrängerkörper 9 eine Mulde 11, in die eine bestimmte Menge an fließfähigem thermoplastischen Kunststoff-Material 12 einbringbar ist.

Die Einbringung des Kunststoff-Materials 12 erfolgt über einen im Verdrängerkörper 9 angeordneten Zuführkanal 13, der, abhängig von der Position des Verdrängerkörpers 9, mit einer in der unteren Formhälfte 2 angeordneten Zuführleitung 14 verbindbar ist.

Im Betrieb wird zunächst die Deckschicht 7 bei geöffneter Preßform 1 eingelegt. Im weiteren wird über den Zuführkanal 13 thermoplastisches Kunststoff-Material 12 in die Mulde 11 eingegeben. Nach dem Schließen der Preßform 1 wird der Verdrängerkörper 9 mittels des Hubkolbens 10 nach oben gedrückt, worauf das thermoplastische Kunststoff-Material 12 in den Formhohlraum 6 gedrückt und mit der Deckschicht 7 verpreßt wird. Das thermoplastische Kunststoff-Material wird dabei von einem zentralen Bereich in die Randbereiche gepreßt, wodurch sich vor allem Kunststoffformteile mit besonders tief herabgezogenen Randberei-chen nach dem Fließpreßverfahren herstellen lassen.

In seiner oberen Position schließt der Verdrängerkörper 9 im wesentlichen bündig mit der Oberfläche der unteren Formhälfte 2 ab. Dabei ergibt sich der Vorteil, daß geringe Differenzen an Schmelzevolumen ausgeglichen werden können. Insoweit kann sich eine Abweichung von der Bündigkeit mit der Formoberfläche ergeben.

Bei Zufuhr von thermoplastischem Kunststoff-Material 12 über den Zuführkanal 13, wird der Verdrängerkörper 9 zunächst in eine untere Position gebracht, in der der Zuführkanal 13 in Verbindung mit der Zuführleitung 14 steht. In dieser Stellung erfolgt eine Befüllung der Mulde 11 mit thermoplastischem Kunststoff-Material 12, die durch Anheben des Verdrängerkörpers 9 unterbrochen werden kann. Der Verdrängerkörper 9 wirkt somit als Sperrschieber.

In der Ausführungsform nach Figur 2 ist die Deckschicht 7 an ihren Randbereichen zwischen der unteren und der oberen Formhälfte 2' bzw. 5' eingeklemmt. Der Verdrängerkörper 9' ist auf einer Basisplatte 15 befestigt, wobei durch beide Bauteile ein Zuführkanal 13' für thermoplastiches Kunststoff-Material geführt ist. In der dargestellten Ausgangsstellung wird die untere Formhälfte 2' durch Wirkung von Federn in Schließstellung gehalten.

## Patentansprüche

1. Vorrichtung zum Herstellen laminierter Formteile, die aus einer Grundschicht aus thermoplastischem Kunststoff-Material (12) und mindestens einer Deckschicht (7) bestehen, mit einer eine untere und eine obere Formhälfte (2,5) und, im Fall von Hinterschneidungen, eine oder mehrere mittlere Formteile (3,4) aufweisenden Preßform (1), mit einer Einrichtung zum Einbringen von fließfähigem thermoplastischen Kunststoff-Material (12) in die untere Formhälfte (2) und einer Preßvorrichtung zum Verpressen des thermoplastischen Kunststoff-Materials (12) zwischen der oberen (5) und unteren Formhälfte (2) und gegebenenfalls den mittleren Formteilen (3,4) unter Zwischenfügung der Deckschicht (7) und unter Einschluß des Formhohlraumes, wobei die Preßvorrichtung aus einem ein Teilstück einer Formhälfte, vorzugsweise der unteren Formhälfte darstellenden kolbenartigen Verdrängerkörper (9) besteht, der bei ansonsten geschlossenem Formhohlraum (6) in einer abgesenkten Position eine Mulde (11) bildet, in die das thermoplastische Kunststoff-Material (12) einbringbar ist und der in einer angehobenen Position bündig mit der Formoberfläche der Formhälfte (2) abschließt, **dadurch gekennzeichnet,** daß der kolbenartige Verdrängerkörper (9,9') einen zu dessen Formoberfläche führenden Zuführkanal (13,, 13') für thermoplastisches Kunststoff-Material (12) aufweist, der in der abgesenkten Position mit einer im übrigen Teil der unteren Formhälfte (2) angeordneten Zuführleitung (14) in Verbindung steht und der in einer angehobenen Position unterbrochen ist.

2. Vorrichtung nach Anspruch 1, **dadurch gekennzeichnet,** daß in der unteren Formhälfte (2,2') mehrere Verdrängerkörper (9,9') angeordnet sind.

## Claims

1. Device for manufacturing laminated moulded parts made of a base layer of thermoplastic material (12) and at least one top layer (7) with a press die (1) having a lower and an upper die half (2, 5) and, in the case of undercuts, one or several middle die parts (3, 4), with a device for inserting flowable thermoplastic material (12) into the lower die half (2) and a pressing device for pressing the thermoplastic material (12) between the upper (5) and lower die halves (2), and, if necessary, the middle die parts (3, 4), with the insertion of the top layer (7) and entrapment of the die cavity, whereby the pressing device comprises a segment of one die half, preferably the piston-like displacement body (9) forming the lower die half, which in an otherwise closed die cavity (6) forms a trough (11) in depressed position into which the thermoplastic material (12) can be inserted and which in a raised position closes level with the die surface of die half (2)
characterised in that the piston-like displacement body (9, 9') has a supply channel (13, 13') leading to its die surface for thermoplastic material (12) which in a depressed position is connected to a supply pipe (14) disposed in the other part of the lower die half (2) and which is interrupted in a raised position.

2. Device according to claim 1, characterised in that several displacement bodies (9, 9') are arranged in the lower die half (2, 2').

## Revendications

1. Appareil de fabrication d'articles stratifiés composés d'une couche de base en une matière thermoplastique (12) et d'au moins une couche de revêtement (7), appareil comportant un moule (1) formé d'un demi-moule inférieur (2), d'un demi-moule supérieur (5) et, en cas de chambrage, d'un ou plusieurs éléments intermédiaires (3, 4) ; un dispositif destiné à délivrer la matière thermoplastique (12) fluide dans le demi-moule inférieur (2) ; et un dispositif de compression destiné à repousser cette matière (12) entre les demi-moules supérieur (5) et inférieur (2) et éventuellement les éléments intermédiaires (3, 4) après interposition de la couche de recouvrement (7) et fermeture de la cavité du moule, ce dispositif de compression étant constitué par un organe de refoulement (9) agissant à la façon d'un piston, qui fait partie de l'un des demi-moules, avantageusement le demi-moule inférieur (2), qui, dans sa position basse et quand la cavité (6) du moule est fermée, forme une cuvette ou gorge (11) dans laquelle la matière thermoplastique (12) peut être délivrée et qui, dans sa position haute, affleure la surface du demi-moule (2), cet appareil étant caractérisé en ce que l'organe de refoulement (9, 9') comporte un canal (13, 13') d'alimentation en matière thermoplastique (12) menant à cette surface, qui, dans la position basse, communique avec un conduit (14) d'alimentation disposé dans la partie restante du demi-moule inférieur (2) et dans la position haute est coupé de ce conduit.

2. Appareil selon la revendication 1, caractérisé en ce que plusieurs organes de refoulement (9, 9') sont disposés dans le demi-moule inférieur (2, 2').
